# EUROPEAN PATENT APPLICATION

(11) **EP 0 971 291 A1**
(43) Date of publication of application: **12.01.2000**
(21) Application number: 99850116.7
(22) Date of filing: 05.07.1999
(51) Int. Cl.: G06F 11/00

(54) **Analysing tool**

(30) Priority: 09.07.1998 SE 9802469
(71) Applicant: Ottosson, Stig, 448 31 Floda (SE)
(72) Inventor: Ottosson, Stig, 448 31 Floda (SE)
(74) Representative: Lindberg, Klas Valter Bo

(57) **Abstract**

The present invention relates to a method for conversion of source code into a graphically surveyable form, to permit understanding, control and follow-up of programming work.

The inventive method comprises the steps of
automatically converting, line by line, individual lines or groups of lines into corresponding graphic elements, the graphic elements being of such a type as to contain essentially all the source code information that is necessary for the program;
storing instructions which refer to succeeding lines in a memory and, when these lines have been found, graphically reproducing this connection; and
showing the entire graphic structure of the source code with the aid a display means.

## Description

### Technical Field

The present invention relates to a method for conversion of source code into a graphically surveyable form.

### Background Art

Computers and software are used in an increasing number of contexts and can today handle a great deal of that previously handled by mechanical, electromagnetic or electronic systems. By using computers, more complex functions can be carried out at a lower cost than in the cases where hardware-based solutions are used. As a result, the devices can also be given smaller dimensions, less energy is consumed and the environmental effects will be smaller while at the same time more functions can be performed. Use is therefore now made of computers operating in real time to control machinery and processes.

A problem in the development of software, however, is that the result is often difficult to notice and understand, especially in the programming stage. For managers and project managers as well as for programmers and many other people, this means that the work that is carried out and is presented on page by page with source code, will be difficult to check and control. It is thus not surprising that the program code is often found to contain errors, so-called bugs. It has been found that about 2% of the lines with source code in large programming systems contain errors (Ben-Menachem, M & Marliss G.S. (1997): Software Quality, Thomson Computer Press, Boston). There is consequently a need for methods and tools to allow improved follow-up and control of the software development.

The more and more powerful computers also make it less important to optimise the software. When errors are detected, only a new way round the errors is in most cases created, which means that they are left in the program code. At the same time it will be more and more difficult to reuse the programs. Correcting programs afterwards and adding various sequences is therefore very difficult. Owing to the fact that coding is effected before the program structure has been made, use is frequently made of, among other things, jump instructions, so-called spaghetti programming, and excessive code which make the program difficult to survey and follow. It is thus desirable to have a method and a tool for analysing and surveying complex program structures.

Moreover, it is in many cases not sufficient only to test completed programs and program modules to achieve sufficient safety implying that errors will not occur when executing the program since all conceivable situations cannot possibly be simulated in testing. In many cases, such as in control systems and the like, such errors may cause considerable problems and have serious consequences when, for instance, control systems can be knocked out. It is therefore desirable to have tools which on the one hand can be used to give the programs a clear and distinct structure and, on the other hand, can be used to check that the program coding satisfies the given requirements and the desiderata.

Furthermore, it is a problem in the software field that the programming languages are changed continuously and that there are various versions of the same language. Thus, use is now seldom made of Allgol and Fortran when coding new programs but instead, for instance, C++ or Java. It goes without saying that this contributes to making the programs difficult to understand for those who are not experts in the field and in the specific programming language used. Further it contributes to making old programs difficult to analyse, correct and reuse. Sometimes, the languages are also mixed in the same program system.

Several graphic forms are known to reproduce programs in a graphic and clear manner. For instance, flow charts are used quite frequently. When drawing-up such graphical representations, which normally takes place either when planning before the programming work starts or as documentation after the program is essentially completed, an additional operation, however, is required for this purpose. This gives it a low priority, which means that in many cases both planning and documenting of software are neglected, and sometimes even omitted, which adversely affects the overall view and results in spaghetti programming.

It is therefore important to be able to convert mechanically code into a graphically surveyable structure. This is disclosed in US 5,450,575. This publication concerns, however, only conversion of machine code, so-called assembler, i.e. program code which is specifically adapted to different processors. The purpose of the conversion from code into the graphic form is also quite different from that intended in the present application since the purpose of this known solution is to identify processor-specific program sections to be able to change these when converting and adapting machine code for one processor to code for another. Using this technique to survey large programs would be impossible since also small programs in source code when compiling to executable form comprise a large number of program lines (instructions). This publication does not indicate anywhere that this technique would be applicable to survey and, thus, be able to control and check programming work in general.

### Object of the Invention

It is therefore an object of the present invention to provide a method which wholly or at least partly eliminates the problems mentioned above.

This object is achieved by a method according to the appended claims.

### Brief Description of the Drawings

In the accompanying drawings:
Fig. 1 shows different possibilities of using the tool and the method according to the invention;
Figs 2a-c illustrate examples of various graphic symbols that are used in an illustrative example of the invention;
Fig. 3 shows an example of a rough graphic representation of a program example; and
Fig. 4 shows the graphic representation in Fig. 3, although in a simplified and pure form.

### Description of Preferred Embodiments

For the purpose of exemplification, the invention will now be described in more detail by way of an embodiment.

The inventive method concerns conversion of source code into a graphically surveyable form, and preferably flow charts. It goes without saying, however, that it is possible to use other graphic forms together with the inventive method. However, the graphic form should be such that the graphic elements can reproduce essentially the same information as the program code, although in a more abstract and clear manner.

According to the suggested method, the source code is gone through line by line, and there occurs an automatic conversion of each line or, alternatively, groups of lines. The programming could also be made directly with a graphical representation, being created together with the programming. This conversion could e.g. occur by means of a table look-up function in a prestored table which transfers source code instructions to graphic elements. Of course, such tables can be made for all available programming languages and graphic forms, the inventive method being in no way locked to a specific programming language or a specific graphic form. When instructions contain jumps in the code, these instructions are stored in a memory to indicate, when this position in the code has been found, this jump as a connection between the graphic elements concerned. When the respective jump instruction has been stated also in the graphic structure, it can be deleted from the memory. In this context, it is important for each code line initially to be given an identifiable designation, such as a line number, to be able to relate jumps and the like to the correct positions in the program.

The graphic structure of the source code is then displayed or presented to a user, either by being printed or on a display. Other display means, however, are also possible.

When the graphic elements contain essentially all the necessary information for the program, the method can also be applied reversibly, the source code being developed on the basis of a graphic structure. This conversion proceeds essentially in the same manner as the above conversion from source code into graphic form. Consequently, the graphic form is processed in such manner that element by element in the stated program order are converted into corresponding source code lines. When jumps are found, these are input as jump instructions in the code, and information about the position to which the jump should take place is stored in a memory. When these positions are later found during the continued conversion, they are indicated in a manner stipulated by the programming language, whereupon the information could be deleted from the memory.

Moreover, the tool is preferably such as to allow a plurality of different graphic elements to be combined to an aggregated unit or module. This can be carried out, for instance, by the user marking a number of graphic elements on the display means and then indicating a common name for these elements. In this way, the clearness of the graphic structure can be further improved. In such combining, information about which elements are included in the aggregated module and how the connection between them appeared in a memory is saved to enable on the one hand a reversion, controlled by the user, to the non-aggregated form and, on the other hand, a conversion into source code. Individual sections and procedures of the program can also be controlled and tested separately and then be combined to modules as stated above. This also permits the work with the program to take place at many different levels, and also zooming up and down in the program structure and, in this way, selecting a suitable level for each specific operation.

The presentation preferably takes place on the display means so that entire circuits are shown continuously as they come up in the processing of the source code. This process can also be temporarily interrupted, thus enabling the user, directly in the development, to make additions or modifications, whereupon the conversion from source code into graphic symbols continues. In this manner the user can interact also in the conversion process.

The user can make changes in the graphic structure, which then, when converting once more into source code, leads to corresponding changes in the source code. In this way the user can easily clean up confused programs and thus make them more effective.

The development of software can be effected either directly or after developing some kind of plan, preferably in a graphic form. In the first case, a formulation of requirements or similar information must be available as a basis for the programmer's work. In order to check developed programs, the developed source code can be converted into a graphic structure as described above. Then a comparison between the plan and the outcome can be carried out. This can take place either manually or automatically. If the comparison is carried out automatically, i.e. mechanically without human interference, the plan or the instructions for the programming work must be stated in the same graphic form into which the source code is to be converted, or a form that can be transformed to this. The comparison can be made at a plurality of different aggregating levels, which means that the comparison will be more or less detailed.

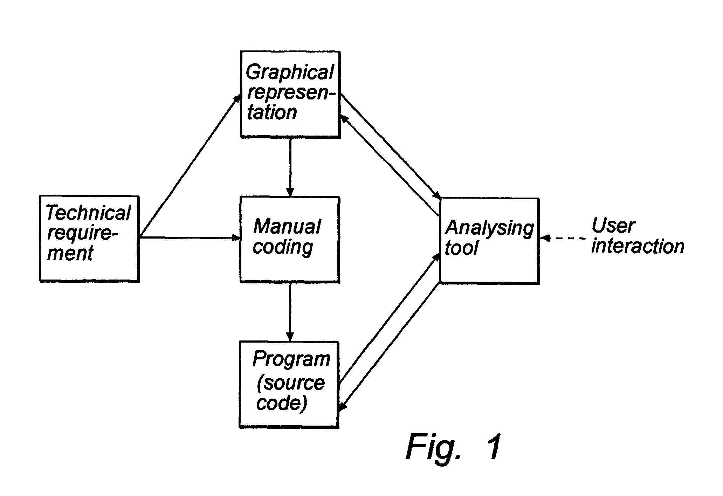

The method and the tool according to the invention can suitably be used as follows when developing new software, as shown in Fig. 1. First a rough plan showing how the program is to be structured is made, preferably divided into suitable modules for performing specific tasks, and preferably in a selected graphic form. Subsequently, the programming work is carried out manually, either directly in source code or using the graphic form although at a detailed level which is then converted into source code by means of the inventive tool. If the programming is carried out using the graphic form, dialog boxes, e.g. comprising different alternative graphical elements and the like, could be presented to the user. Additionally or alternatively, a toolbar or the like could be provided. The source code and the graphical representation could preferably be presented to the user simultaneously in different windows or panes in the same screen image, or by other suitable means. The source code is converted into a graphic structure by means of the above tool, either together with the programming or afterwards. Subsequently, the above tool could be used to clean up and re-structure the program structure, on the one hand by optimisation of the program structure and, on the other hand, by combining the same elements to aggregated modules. Finally this aggregated and optimised structure is compared with the plan, in cases there is one, and differences are observed and illustrated. These differences can then be analysed, whereupon suitable measures, such as completions or corrections, can be taken.

The invention concerns a new tool for software development and control of software development. With this tool, a program can be prepared automatically from a graphic form, such as a flow chart, which makes the programming work faster and further reduces the number of errors in the programs. If the flow chart is not available in computer code, it can be scanned. It is also possible to adjust the tool so that test runs can be made on the basis of the graphic symbols, whereupon programming for the intended application, for instance robots, is carried out.

By means of the tool and the method according to the invention, errors can be detected even before the program is test-run. Moreover the programming work can be facilitated and made more effective and, thus, faster while at the same time the number of errors decreases, which further speeds up the work.

The invention can also be used as a tool to give the programmer, project managers, managers etc. the possibility of following up the work and seeing how it develops in relation to drawn-up plans. As a side effect this can also result in the number of errors decreasing and subsequent completions being facilitated.

The invention also facilitates documenting of developed software, which in many cases has a low priority and is disliked by many program developers. This makes it possible to maintain and update the program more easily and in a less expensive way and to reuse the entire program or parts thereof when developing new software.

Still further, the invention can be used to compare different programs or program systems in order to identify e.g. unauthorised copying of another's program code and/or underlying program structures. By means of the inventive tool, also complex program systems can be readily compared to identify modules or sections which have the same code or use the same algorithms. In this manner, patent or copyright infringement can be identified even if the infringer has disguised the infringement by adding meaningless non-functional code or the like.

### Description of an Example of Use according to the Invention

Finally an Example will now be described, where the conversion by the inventive method is illustrated.

A program for starting an electric motor is concerned in the illustrative example. The program shall switch on the current, check that the motor is running and repeat this check at regular intervals. If the motor is not running, an error printout should be made and the current be checked. If the current is switched off, it must be switched on. If the motor does still not rotate, the procedure must be repeated, and if the motor does not start after two attempts, the attempts are to be stopped and the program interrupted.

The programmer possibly begins making a flow chart or the like of the program structure or, alternatively, enters the code directly. The program can then, in a schematic and invented language, be as follows:
1. Do (start motor) goto 2
2. Do (switch on current) goto 3
3. If (does motor run?) goto 4 else 5∧6
4. Do (timer) goto 3
5. If (current on?) goto 6∧8 else 7
6. Do (error printout) goto -
7. If (third attempt?) goto 8 else 2
8. Do (stop) goto -

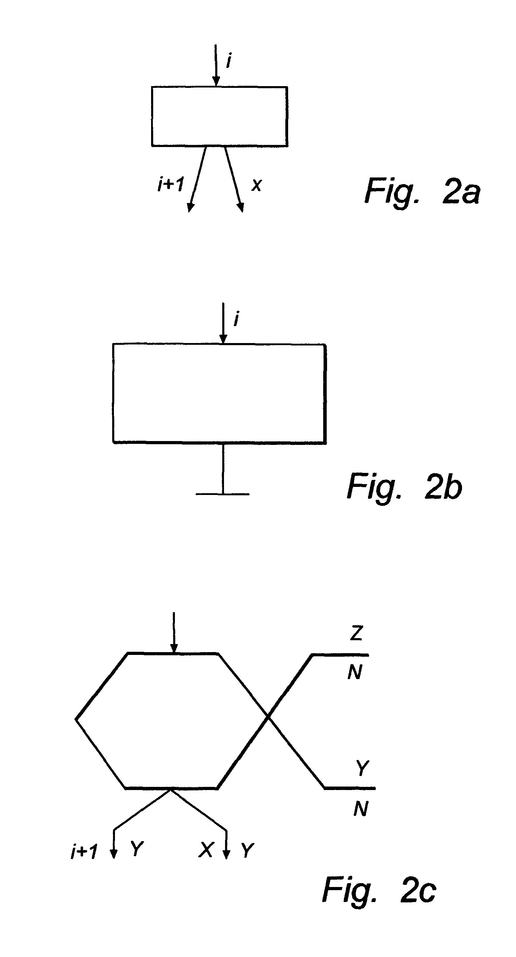

The rules for converting into graphic symbols for the inventive tool are in this case:
- expressions such as "i Do ( ) goto i+1, x" are graphically represented with a rectangular symbol, in which the expression in brackets is inserted, with an upper ingoing line, designated i, and two lower outgoing lines, designated i+1 and x, respectively. This symbol is shown in Fig. 2a.
- expressions such as "i Do ( ) goto -" are graphically represented with a rectangular symbol, in which the expression in brackets is inserted, with an upper ingoing line, designated i, and a lower outgoing line terminating with a horizontal dash. This symbol is shown in Fig. 2b.
- expressions such as "i If ( ) goto i+1∧x else z∧y" are graphically represented with a hexagonal symbol, in which the expression in brackets is inserted, with an upper ingoing line, designated i, a pair of outgoing lines, designated i+1, y and x, y, respectively, and a pair of outgoing lines, designated z, N and y, N, respectively. This symbol is shown in Fig. 2c.

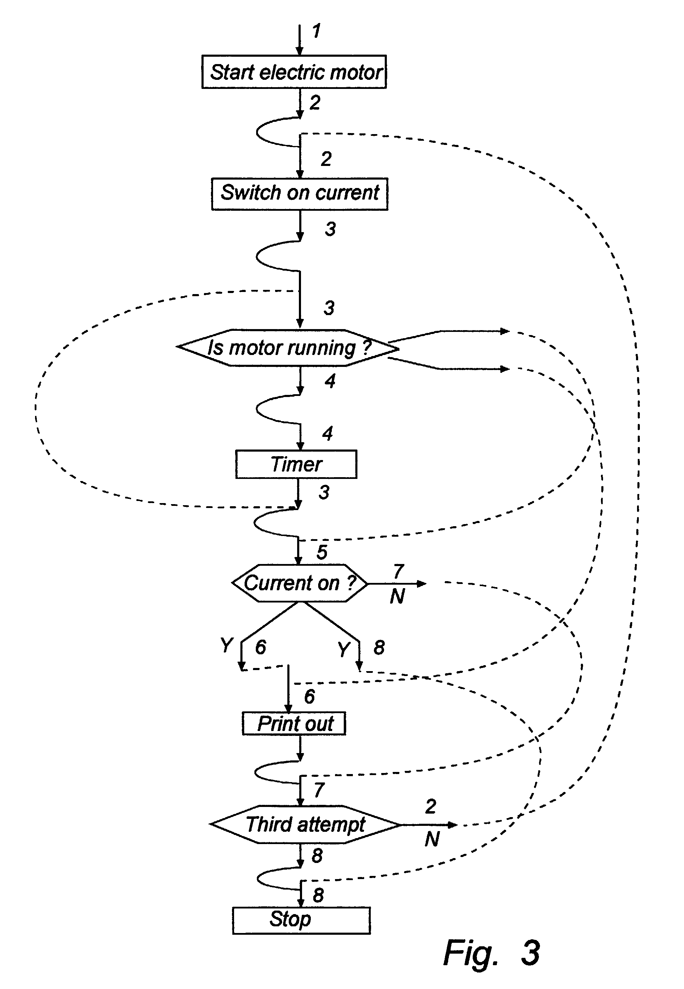

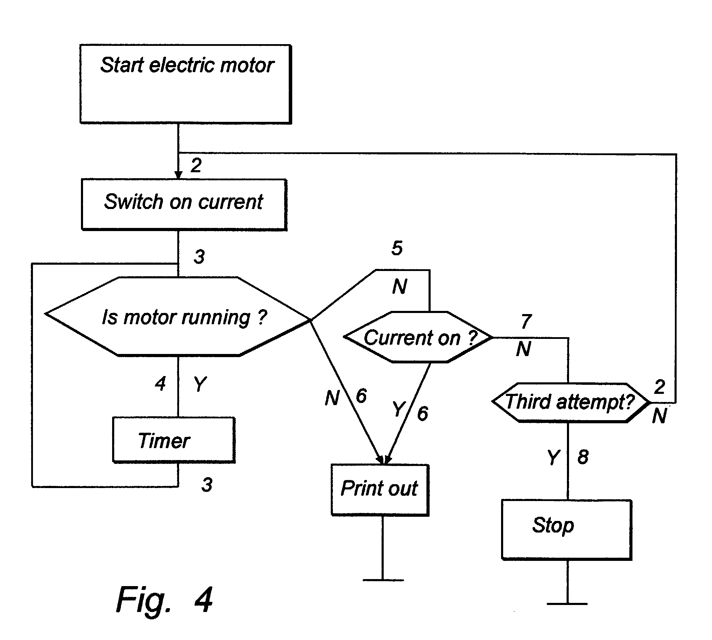

By using the method and tool according to the invention, the program can now be automatically converted into a graphic representation by each code line being numbered, and then line by line converting the code into corresponding graphic symbols according to the rules above, the jump addresses being stored in a memory. The program can be represented graphically as shown in Fig. 3, where jump instructions are indicated by dashed lines. When the entire program has been converted, a fair and simplified copy can be drawn of the graphic representation, and the program representation in this Example can be given the form as shown in Fig. 4.

On the other hand, the graphic representation, independently of whether it has been produced directly or on the basis of already written program code, can be converted into corresponding program code. In this conversion, first inputs and outputs for each symbol are numbered. The symbols are possibly also broken apart so that each symbol will be separated, i.e. in the manner illustrated in Fig. 3. Then symbol by symbol are read and the information is collected and converted into a corresponding code expression according to the reversible rules stated above. Each code line is assigned a code address, which is enumerated automatically, a code form which is given by the graphic form, a code condition which is given by that enclosed by the graphic form, jump addresses which are given by the designations of the outputs and which are stored until the corresponding inputs have been found, whereupon they are converted into corresponding code address designations.

The invention is applicable for source code in essentially all programming languages, inclusive of object oriented languages. For such languages the expression "lines" in the claims should be interpreted as its equivalent, such as objects or parts of objects.

## Claims

1. A method for conversion of a source code into a graphically surveyable form, **characterised** by the steps of
automatically converting, line by line, individual lines or groups of lines into corresponding graphic elements, the graphic elements being of such a type as to contain essentially all the source code information that is necessary for the program;
storing instructions which refer to succeeding lines in a memory and, when these lines are found, graphically reproducing this connection; and
showing the entire graphic structure of the source code with the aid of a display means.

2. A method as claimed in claim 1, **characterised** in that the method is also reversible, the method also being usable for at least partial automatic conversion from the graphic form into source code, in which case the graphic elements in turn are converted into corresponding source code in the desired programming language.

3. A method as claimed in claim 1 or 2, **characterised** in that it comprises the additional step of combining the graphic symbols to aggregated units, thereby increasing the clearness of the graphic form, the contents of the aggregated units being stored in a memory, and the user preferably being able to control which aggregating level is to be used.

4. A method as claimed in any one of the preceding claims, **characterised** in that the graphic form is a schematic graphical representation, such as a flow chart.

5. A method as claimed in any one of the preceding claims, **characterised** in that the automatic conversion from source code into graphic elements and from graphic elements into source code is effected by means of a predefined table.

6. A method as claimed in any one of the preceding claims, **characterised** by the further step of comparing the graphic structure with a plan made in advance for developing the source code, and locating and marking deviations therebetween.

7. A method as claimed in any one of the preceding claims, **characterised** in that the graphic structure is shown to the user continuously as the conversion from source code into graphic elements proceeds.

8. A method as claimed in any one of the preceding claims, **characterised** in that the graphic structure is easily manipulatable with the aid of the display means.

9. Use of the method as claimed above for developing and preparing of source code for computer programs.

10. Use of the method as claimed above for follow-up and control in software development.
